# EUROPEAN PATENT SPECIFICATION

(11) **EP 2 060 814 B1**
(45) Date of publication and mention of the grant of the patent: **08.12.2010**
(21) Application number: 07806005.0
(22) Date of filing: 23.08.2007
(51) Int. Cl.: F16D 9/04, F16D 9/00, F16H 35/10

(54) **POWER TRANSMISSION DEVICE**
KRAFTÜBERTRAGUNGSVORRICHTUNG
DISPOSITIF DE TRANSMISSION DE PUISSANCE

(30) Priority: 06.09.2006 JP 2006241277
(43) Date of publication of application: 20.05.2009
(60) Divisional application: 10188005.2
(73) Proprietor: Sanden Corporation, Isesaki-shi, Gunma 372-8502 (JP)
(72) Inventor: TAKAI, Kazuhiko, Isesaki-shi, Gunma 3728502 (JP)
(74) Representative: Prüfer & Partner GbR European Patent Attorneys
(86) International application number: PCT/JP2007/066376
(87) International publication number: WO 2008/029629

(56) References cited:
- EP-A- 0 000 212
- DE-A1- 2 901 572
- DE-C- 445 231
- GB-A- 2 054 105
- JP-A- 08 284 824
- JP-A- 11 190 361
- JP-A- 2003 049 865
- JP-A- 2003 049 865
- JP-A- 2003 254 402
- JP-A- 2003 254 402
- JP-A- 2005 273 677

## Description

### Technical Field of the Invention

The present invention relates to a power transmission device, for example, to a power transmission device which is suitable to transmit drive power from a vehicle engine to a device mounted in a vehicle (e.g. a compressor used in an air conditioning system for a vehicle).

### Background Art of the Invention

A power transmission device is frequently required to have a function of a torque limiter which interrupts to transmit excessive drive power. For example, when a drive load at the side of a compressor as a driven body becomes excessive from some reason when the compressor is driven by transmitting drive power from a vehicle engine to the compressor in an air conditioning system for a vehicle, drive power transmission (torque transmission) is desired to be interrupted to protect the vehicle engine or a belt.

As such torque transmission interruption mechanisms, various mechanisms are known, such as a rupture-type torque limiter which has a member or a part to be ruptured when a transmission load over a predetermined value is applied between a member at the driving side and a member at the driven side. For example, a power transmission device described in Patent document 1 has a rupture-type torque limiter having a coupling member which is formed between a pulley at the drive source side and a rotation transmission plate attached to a shaft of a compressor at the driven side, and which is to be ruptured when the compressor abnormally stops by a failure, etc.
Patent document 1: Japanese Utility Model Laid-Open 6-39105 .
DE 445231 C discloses a torque transmitting member, which transmits a torque from a driving body to a driven body, wherein the torque transmitting member interrupts transmission of torque from the driving body by breaking itself, when drive load on the driven body exceeds a predetermined level.
GB-A-2054105 discloses another torque transmitting member as a sheer pin coupling having two coupling members which are interconnected by a sheer pin received in a gap between two separate cutting elements in the coupling member. This makes the coupling effective for either direction of rotation.

### Disclosure of the Invention

### Problems to be solved by the Invention

However, the conventional rupture-type torque limiter as described above generally has the following problems, specifically in a case where the drive source accompanies an output fluctuation like an engine. To be explained by taking the structure shown in the above-described Patent document 1 as an example, in the structure shown in the above-described Patent document 1, as shown in Fig. 10, rotation transmission plate 103 is attached to the end section of main shaft 102 of compressor 101, and the drive torque of an engine (not shown) is transmitted from pulley 104 to rotation transmission plate 103 via coupling member 105 provided to couple between pulley 104 and rotation transmission plate 103, so that main shaft 102 is rotated. In thus constructed power transmission device for a compressor, a load accompanied with an engine torque fluctuation is applied to coupling member 105 as a shear load holding-type torque interruption body (or a torque transmission body), and a shear stress is loaded to coupling member 105 alternately in the forward / backward direction of the rotational direction. If such an alternate load is applied, a fatigue may be generated in coupling member 105, and therefore, the coupling member 105 may be ruptured by a torque lower than a target rupture torque value and a torque interruption may not performed at a predetermined value. Further, other than the above-described embodiment of coupling member 105 to which such a shear load as described above is applied, although a system is considered to couple between a pulley and a hub at the side of a main shaft of a compressor, simply by a plate member extending along the rotational direction, in this case, a tensile load and a compressive load, are applied to the plate member as alternative loads, which may generate a metal fatigue in the plate member after all, and an interruption torque cannot be set at a high accuracy.

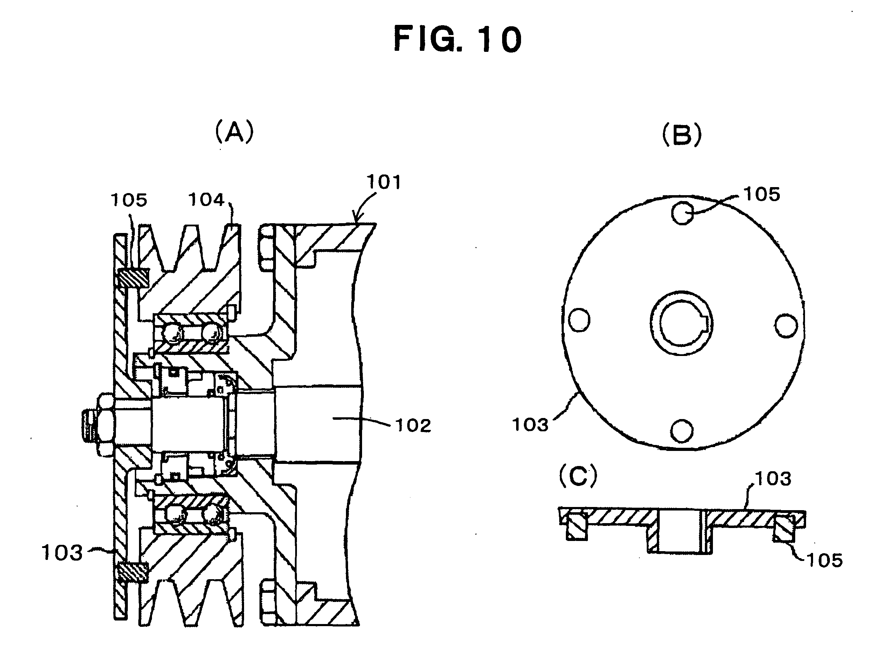

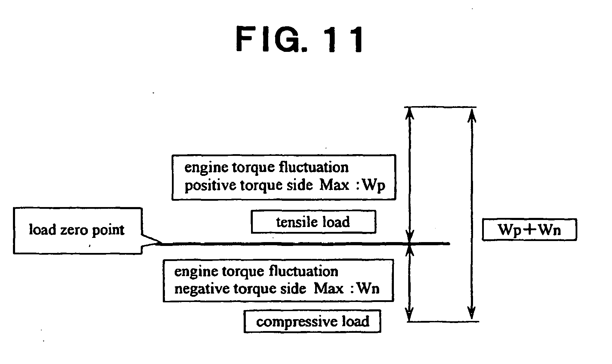

Such problems in the conventional devices can be expressed schematically as below. Namely, a rotational fluctuation accompanied with a stroke change of explosion / compression of the engine generates an engine output fluctuation. When the maximum torque value at the side of positive torque including a torque fluctuation in the above-described power transmission device is referred to as Wp, and the maximum torque value at the side of negative torque is referred to as Wn, the total amplitude of the torque fluctuation can be expressed as (Wp+Wn), as shown in Fig. 11. That is also applicable to the shear load holding-type torque interruption body depicted in Fig. 10, since a shear stress is applied alternately in both directions of forward (normal) / backward directions to it. Thus, because the fluctuation load ascribed to the above-described torque amplitude has acted entirely in the conventional rupture-type torque transmission device, a torque transmission member to be functioned as a torque interruption body has caused a fatigue phenomenon and interrupted at torque less than a target rupture torque value. If a rupture-type torque limiter is designed in consideration of such a material fatigue, an instant rupture torque may be so great that it becomes unfit for protecting a belt and an engine as the original purpose.

Accordingly, an object of the present invention is to provide a power transmission device which can minimize an affection of torque fluctuation which may exist (e.g., even if an output torque fluctuation of an engine may exist) at the side of a driving body, and which can interrupt torque accurately at a target interruption torque value.

### Means for solving the Problems

This object is achieved by a device according to claims 1 and 14. Further advantageous developments are subject to the dependent claims. A power transmission device according to the present invention is a power transmission device, in which a driven body and a driving body for driving the driven body are rotated in the same direction and are connected to each other by a connection section to transmit torque of the driving body to the driven body and in which a transmission of torque from the driving body is interrupted when a drive load on the driven body exceeds a predetermined level, wherein the connection section is constructed by combining separate elements that are a positive torque transmission member which transmits torque in a normal rotational direction and interrupts transmission of torque from the driving body by breaking itself when a drive load on the driven body exceeds the predetermined level, and a negative torque transmission mechanism or a negative torque transmission member which can transmit torque in a reverse rotational direction. Namely, alternate loads of positive torque and negative torque are applied not to a single member but respectively to the separate members comprising the positive torque transmission member and the negative transmission member. Such a structure makes it possible to suppress generation of a fatigue phenomenon only in a single member by the alternate loads, and to prevent the rupture of the torque transmission member at a torque much less than a target interruption torque value.

In the power transmission device according to the present invention, it is preferred that a rigidity or a rupture strength of the positive torque transmission member is set lower than a rigidity or a rupture strength of the negative torque transmission mechanism or negative torque transmission member. Such a structure aims to surely realize to rupture the positive torque transmission member when an excessive torque is generated, from the viewpoint of that the torque interruption should be preferably performed against the excessive torque at the positive torque side for protecting devices, at the time of torque interruption at a target interruption torque value.

Further, it is preferred that pre-loads in directions opposite to each other are given to the positive torque transmission member and the negative torque transmission mechanism or negative torque transmission member at an assembly condition thereof, and the pre-loads are nearly balanced to each other by relation of action and reaction. By giving such pre-loads, torque fluctuation amplitude during transmission can be greatly reduced as described later, so that an affection of the material fatigue can be suppressed to the minimum.

As the above-described pre-loads, for example, a tensile pre-load can be applied to the positive torque transmission member and a compressive pre-load can be applied to the negative torque transmission mechanism or negative torque transmission member, in a device rotational direction. By thus applying both of the tensile pre-load and the compressive pre-load in the device rotational direction together, the tensile pre-load and the compressive pre-load can act in the almost opposite directions during reduction of torque fluctuation amplitude so that the torque fluctuation amplitude can be greatly reduced efficiently and very effectively.

A structure of each torque transmission member is not limited especially, and for example, the above-described positive torque transmission member can be constructed as a continuous body extending between the driving body and the driven body. Because the positive torque transmission member is constructed as the continuous body, a target torque interruption can be surely accomplished even if a rupture is generated at any position thereof, so that it is enough to set a part, where the rupture should be generated, loosely in an appropriate range so as to be able to contribute simplification of the structure. Further, a rigidity or a sectional area, etc. of the part where the rupture should be generated can be easily set, thereby facilitating the design.

On the other hand, the negative torque transmission mechanism or negative torque transmission member can be formed, for example, in a divisional structure having a contact section in the mechanism or member, namely, a structure, wherein at least two parts have the contact section and a compression load, etc. is given to the contact section, may be employed. If the rupture is generated at the side of the positive transmission member, a target torque interruption can be accomplished, and therefore, the structure at the side of the negative torque transmission mechanism or negative torque transmission member may be enough merely to be able to receive the negative torque, and it is not always necessary to be a continuous body. Rather than that, in a combined structure of the positive torque transmission member and the negative torque transmission mechanism or negative torque transmission member, when a rupture is generated in the positive torque transmission member, a coupling condition in the negative torque transmission mechanism or negative torque transmission member is preferred to be interrupted immediately in conjunction with the rupture of the positive torque transmission member, so as to avoid the negative torque transmission mechanism or negative torque transmission member from becoming an obstacle to the torque interruption condition, and therefore, it is preferably formed in the above-described divisional structure.

In the structure where the tensile and compressive pre-loads are applied as described above, a length of a part to which the tensile pre-load of the positive torque transmission member is applied is preferably set shorter than a length of a part to which the compressive pre-load of the above-described negative torque transmission mechanism or negative torque transmission member is applied. By employing such a structure, for example, when both of the positive torque transmission member and the negative torque transmission mechanism or negative torque transmission member are coupled to each other by a bolt, a pin, a rivet, etc., at a condition where the positive torque transmission member is elongated by the tensile pre-load and the negative torque transmission mechanism or negative torque transmission member is compressed by the compressive pre-load, they may be easily assembled, and a condition where pre-loads are mutually applied may be easily realized.

Further, the negative torque transmission mechanism can be formed, for example, in such a structure that has a spring section that exhibits a spring force in a device radial direction and has an engagement section that engages a side of the driving body and a side of the driven body via the spring section. In such a case, the engagement section is preferably constructed so as to be able to keep the spring force of the spring section in the device radial direction. Further in that case, the spring section is preferably constructed so as to be able to get back, by its own spring force, to its own free position that is non-interactive with the driving body or driven body, after release of keeping of the spring force that is accompanied with an interruption of torque transmission between the driving body and the driven body. Namely, in such a structure, keeping the spring force of the spring section by the engagement section makes it possible that any torque other than positive torque is not substantially applied to the positive torque transmission member in a torque transmission condition, and the spring section can get back naturally and quickly by its own spring force to its own non-interactive free position after the torque interruption by the rupture of the positive torque transmission member.

Further, it is also preferred that the positive torque transmission member and the negative torque transmission member are pre-assembled as parts that can construct the connection section, at a condition applied with respective predetermined pre-loads. In such a structure, because the element constructing the coupling section can be prepared substantially as a single part configuration beforehand, the incorporation thereof into the power transmission device can be extremely facilitated. Furthermore, the device structure can be greatly simplified as a whole.

Further, in a case where the negative torque transmission mechanism or negative torque transmission member is formed in the divisional structure as aforementioned, it is preferred that means for regulating relative positional displacement between both sides of the contact section (e.g., means for regulating relative positional displacement in the axial direction of the mechanism or member) is provided for the negative torque transmission mechanism or negative torque transmission member which is constructed as the divisional structure. Thus, by having the means for regulating relative positional displacement, the predetermined structure of the negative torque transmission mechanism or negative torque transmission member can be kept even in a divisional structure. In addition, it is also possible to give this function as the means for regulating relative positional displacement to the positive torque transmission member as shown in.the example described later.

The power transmission device according to the present invention is effective in a case where there is a fluctuation in an output torque of a source of driving, and specifically, effective in a case where the source of driving force is an engine of a vehicle. When the driving force from the engine of the vehicle is transmitted, since the fluctuation of the engine output is inevitably generated more or less by a rotational fluctuation accompanied with a stroke change of expansion / compression of the engine, a required torque interruption can be accurately performed at the time of torque transmission.

Further, the power transmission device according to the present invention is effective, for example, also as a device for transmitting torque to a compressor, and the device can adequately protect the compressor or the drive source side by an accurate torque interruption when an excessive torque is generated. It is specifically effective as a device for transmitting torque to a compressor used in an air conditioner for a vehicle, and in particular, as a device for transmitting torque to a compressor whose drive source is an engine.

When an engine is used as a drive source, the above-described pre-loads are preferably greater than a value of torque to be transmitted including a torque fluctuation of the engine and smaller than a set value of torque at which a torque transmission should be interrupted. Such a setting makes it possible that, even if the engine torque fluctuation exists, a usual fluctuation is all within the range of the pre-loads and is absorbed within the range of the pre-loads so as not to be transmitted as a substantial fluctuation to the driven body, and it acts to the coupling section so that a desirable torque interruption is performed, only when an excessive transmission torque is generated by a trouble at the side of the driven body, etc.

### Effect according to the Invention

Thus, in the power transmission device according to the present invention, even if torque fluctuation exists at the side of a drive source or a driving body, for example, even if an engine torque fluctuation exists, its affection can be suppressed to the minimum, and occurrence of fatigue of materials of the connection section can be suppressed and torque can be interrupted accurately at a target interruption torque value.

Further, in the power transmission device according to the present invention, the structure of the coupling section may be formed in a simple structure, and therefore, the device can be achieved with few parts at low cost.

### Brief explanation of the drawings

[Fig. 1] Fig. 1 shows an elevational view (A) and a vertical sectional view (B) as viewed along B-B line of a power transmission device according to example I of the present invention.
[Fig. 2] Fig. 2 is an exploded partial elevational view of the device depicted in Fig. 1.
[Fig. 3] Fig. 3 is an elevational view of the device depicted in Fig. 1, showing a condition immediately after torque interruption.
[Fig. 4] Fig. 4 is a partial elevational view of the device depicted in Fig. 1, showing a condition immediately after torque interruption, as viewed by removing a positive torque transmission member.
[Fig. 5] Fig. 5 is an elevational view of a power transmission device according to example 2 of the present invention.
[Fig. 6] Fig. 6 shows an exploded structural diagram (A) of a torque transmission member in the device depicted in Fig. 5, and a sectional view (B) of its sub ASSY.
[Fig. 7] Fig. 7 is an elevational view of the device depicted in Fig. 5, showing a condition immediately after torque interruption.
[Fig. 8] Fig. 8 is an exploded structural diagram of a torque transmission member in the device depicted in Fig. 5, showing a condition immediately after torque interruption.
[Fig. 9] Fig. 9 is a diagram indicating a relationship between amount of elastic deformation and load, showing a concept of torque transmission condition when a torque fluctuation exists in the present invention.
[Fig. 10] Fig. 10 shows a vertical sectional view (A), a partial elevational view (B) and a partial sectional view (C) of a conventional power transmission device.
[Fig. 11] Fig. 11 is an explanation diagram showing a concept of transmission torque amplitude when a torque fluctuation exists, in a conventional power transmission device.

### Explanation of symbols

- 1,21:: power transmission device
- 2,22:: pulley as driving body
- 3,23:: hub body as driven body
- 4,24:: main shaft of compressor
- 5:: thread section of main shaft
- 6,25:: nut
- 7,26:: coupling section
- 8,27:: positive torque transmission member
- 9:: negative torque transmission mechanism
- 10,29:: pin or rivet
- 11:: collar
- 12,31:: contact section
- 13:: spring section
- 14:: engagement section
- 28:: negative torque transmission member
- 28a:: main body of negative torque transmission member
- 28b:: collar
- 30:: sleeve
- 32:: sub ASSY of torque transmission members

### The Best mode for carrying out the Invention

Hereinafter, desirable embodiments of the present invention will be explained referring to figures.

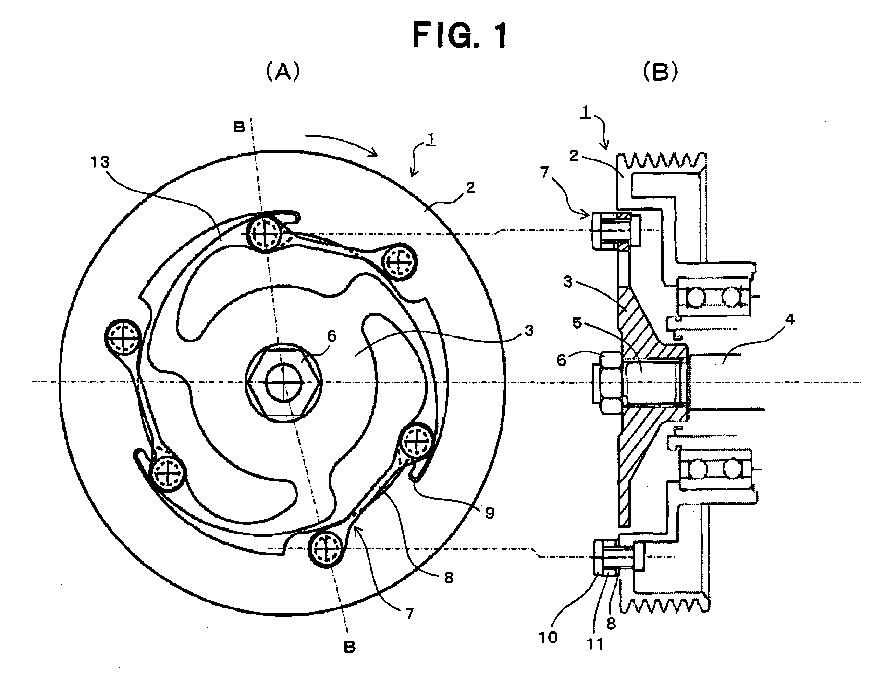

Fig. 1 - Fig. 4 show a power transmission device according to example 1 of the present invention. In Fig. 1, symbol 1 indicates a whole power transmission device, and power transmission device 1 has pulley 2 as driving body to which driving force is transmitted from an engine and hub body 3 as driven body which is coupled and fixed to an end section of main shaft 4 of a compressor via thread section 5 of main shaft 4 and nut 6, which are rotated in the same direction (direction shown by the arrow in Fig. 1(A) ). Such pulley 2 and hub body 3 are coupled via coupling section 7, so that torque of pulley 2 as driving body is transmitted to hub body 3 as driven body, and when a drive load of the driven body exceeds a predetermined value, torque transmission is to be interrupted by rupture of structural element of coupling section 7 as described later. In this example, coupling section 7 is disposed as a plural formation, particularly as three sets of sections, at an equal pitch in the circumferential direction.

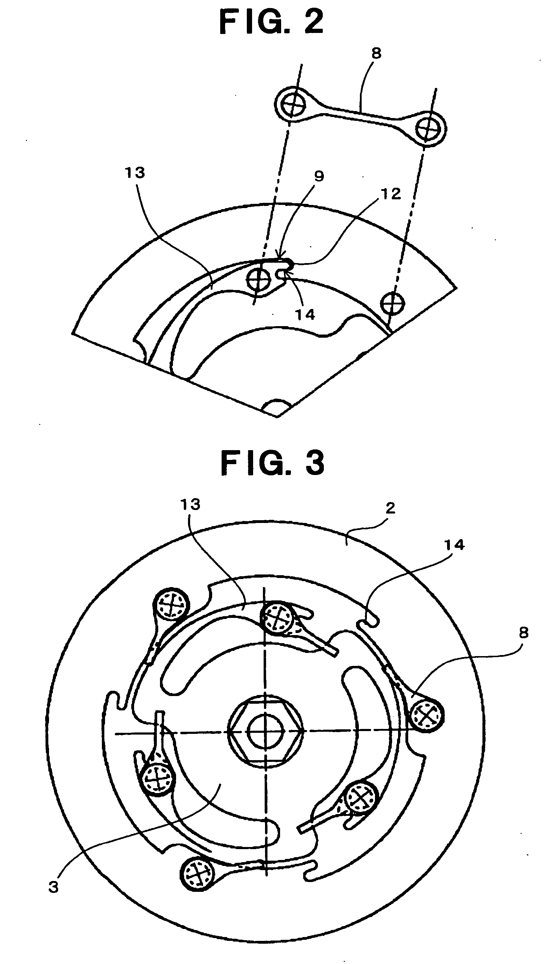

Each coupling section 7 is constructed by combination of a positive torque transmission member and a negative torque transmission mechanism or a negative torque transmission member which are separated from each other, wherein the positive torque transmission member transmits torque in the normal rotational direction (direction shown by the arrow in Fig. 1 (A)), and interrupts torque transmission from a driving body by rupture of itself when drive load of a driven body exceeds a predetermined value, and the negative torque transmission mechanism or negative torque transmission member can transmit torque in the reverse rotational direction. In this example, positive torque transmission member 8, as shown in Fig. 2, is constructed as a continuous body substantially extended in a device rotational direction between pulley 2 as driving body and hub body 3 as driven body, with its both end sections coupled to pulley 2 side and hub body 3 side via pin or rivet 10, collar 11.

Further, negative torque transmission mechanism 9 is provided to transmit negative torque in this example. Such negative torque transmission mechanism 9 is formed in a divisional structure with contact section 12 therein. Further, outer circumferential part in a radial direction of hub body 3 in negative torque transmission mechanism 9 is formed in an arm shape extended substantially in a device rotational direction, and has spring section 13 exhibiting a spring force in a device radial direction, and has engagement section 14 engaging a driving body side (pulley 2 side) and a driven body side (hub body 3 side) via a tip of spring section 13. Engagement section 14 is constructed so as to be able to keep the spring force of spring section 13 in the device radial direction, which can exhibit to get spring section 13 back inside in the device radial direction. Then, spring section 13, as described later, is constructed so as to be get back to its own free position that is non-interactive with the driving body by its own spring force, after release of keeping the spring force that is accompanied with an interruption of torque transmission between the driving body and the driven body. In this example, the above-described positive torque transmission member 8 couples the side of a tip of spring section 13, which is thus kept to engagement section 14 and the side of pulley 2 as driving body.

In case that pulley 2 as driving body and hub body 3 as driven body are coupled together via coupling section 7, pre-loads in directions opposite to each other are given respectively to positive torque transmission member 8 and negative torque transmission mechanism 9, which construct coupling section 7 at an assembly condition, with both pre-loads nearly balanced to each other by relation of action and reaction. In this example, a tensile pre-load and a compressive pre-load are applied respectively in the device rotational direction to positive torque transmission member 8 and negative torque transmission mechanism 9, and they are assembled so as to realize such a condition. The tensile pre-load applied to positive torque transmission member 8 is set larger than torque value with consideration of the engine torque fluctuation which is generated between pulley 2 as driving body and hub body 3 as driven body, and is set smaller than a target interruption torque value.

Positive torque transmission member 8 has a narrow rupture section existing between coupling sections of both end sections, and can weaken a rigidity at that section by the existing of that section, suppress spring constant of a tension and rupture at that section, when an excessive torque is generated, since the rupture strength at that section is weakened. In order to rupture surely at the side of positive torque transmission member 8, in case that an excessive torque is generated, a rigidity or a rupture strength of positive torque transmission member 8 is set lower than a rigidity or a rupture strength of negative torque transmission mechanism 9.

Further, as aforementioned, negative torque transmission mechanism 9 is formed as a divisional structure, and is in a condition where a compressive pre-load is applied by the structure of the portions present at both sides of contact section 12 contacted to each other. If only this part is regarded as an independent structure, because the portions at both sides of contact section 12 are allowed to be moved relatively (in particular, moved to relatively in the plate thickness direction) (a structure capable of being displaced in position), means for regulating relative positional displacement is provided in order to prevent such a relative positional displacement. In this example, because such a means for regulating relative positional displacement is accomplished by being provided at the position where positive torque transmission member 8 extending between pulley 2 and hub body 3 substantially overlaps with contact section 12, positive torque transmission member 8 doubles as the above-described means for regulating relative positional displacement.

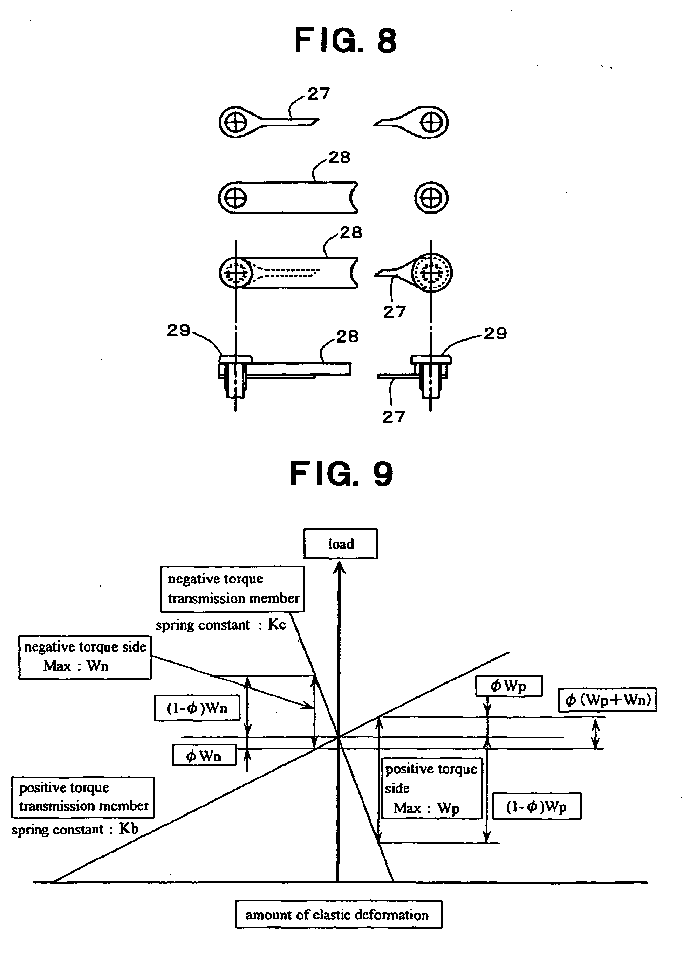

In thus constructed power transmission device 1 according to example 1, torque is transmitted as described below. Fig. 1 (A) shows a condition of a usual torque transmission. To be Explained using Fig. 9, if a torque fluctuation amplitude ascribed to an engine torque fluctuation applied to positive torque transmission member 8 is calculated, since a tensile pre-load greater than a torque value corresponding to the engine torque fluctuation is applied to positive torque transmission member 8, a compressive stress is not generated in a usual transmission condition, and a load fluctuation becomes φ (φ << 1) times the torque fluctuation amplitude (Wp+Wn), and therefore, the load fluctuation becomes very small (namely, it becomes smaller by φ times as compared with the torque fluctuation amplitude (Wp+Wn) in the aforementioned conventional structure). That is because the spring constant Kb of positive torque transmission member 8 is set sufficiently smaller than the spring constant Kc of negative torque transmission mechanism 9 (or negative torque transmission member in example 2 described later). Wherein, Wp indicates the maximum value of an engine torque fluctuation at the positive torque side, and Wn indicates the minimum value of the engine torque fluctuation at the negative torque side. Where, φ = Kb / (Kb+Kc).

Thus, even if an engine torque fluctuation exists, its affection can be suppressed to the minimum. More concretely, amplitude of transmission torque fluctuation can be greatly reduced and a metal fatigue, and a fatigue of positive torque transmission member 8 in particular, can be minimized, and therefore, an accurate operation at the target rupture torque can be performed when an excessive torque is generated.

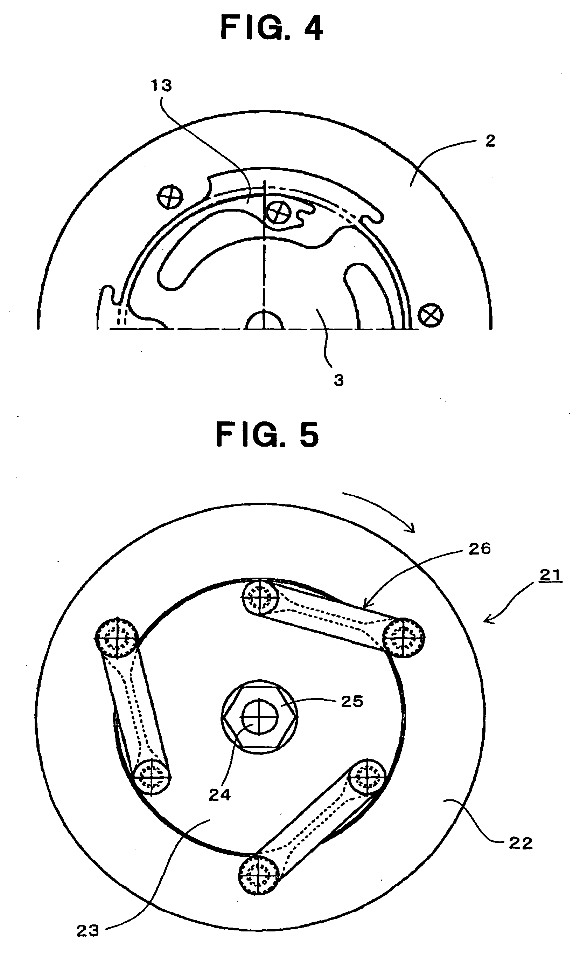

On the other hand, when an excessive torque is generated, as shown in Fig. 3, positive torque transmission member 8 ruptures at a central part as designed beforehand whose rigidity has been weakened, and the torque transmission is stopped. As a result, rotation of hub body 3 stops and rotation of main shaft 4 also stops, so that the drive source side, namely, pulley 2 or a belt, etc., for transmission of drive force to pulley 2 is also protected adequately. Then, since the rupture of positive torque transmission member 8 quickly releases the engagement of spring section 13 in engagement section 14, spring section 13 which has been held by engagement section 14 is released from pulley 2 side and naturally gets back, by its own spring force, to its own free position, and is moved to the position that is non-interactive (non-contact) with pulley 2 side, and therefore, only pulley 2 side is idled, as shown in Fig. 4 that is viewed by removing positive torque transmission member 8. Therefore, a desirable torque interruption can be performed smoothly and surely.

Fig. 5 - Fig. 8 show a power transmission device according to example 2 of the present invention. Symbol 21 indicates a whole power transmission device in Fig. 5, and power transmission device 21 has pulley 22 as driving body to which drive force is transmitted from an engine and hub body 23 as driven body which is coupled and fixed to an end section of main shaft 24 of a compressor via nut 25, etc., which are rotated in the same direction (direction shown by the arrow in Fig. 5). Such pulley 22 and hub body 23 are coupled via coupling section 26 so that torque of pulley 22 as driving body is transmitted to hub body 23 as driven body, and when a drive load of the driven body exceeds a predetermined value, torque transmission is to be interrupted by rupture of an element of coupling section 26 as described later. In this example, coupling section 26 is disposed as a plural formation, particularly as three sets of sections, at an equal pitch in the circumferential direction.

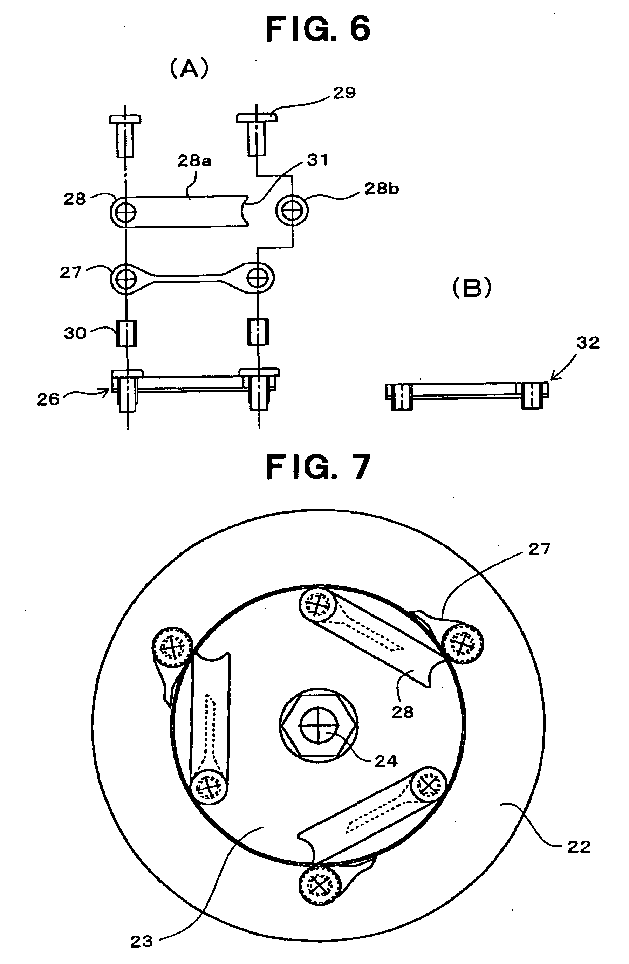

Each coupling section 26, as shown in Fig. 6 (A) in this example, is constructed by combination of positive torque transmission member 27 and negative torque transmission member 28 which are separated from each other, wherein the positive torque transmission member 27 transmits torque in the normal rotational direction (direction shown by the arrow in Fig. 5), and interrupts torque transmission from a driving body by rupture of itself, when a drive load of a driven body exceeds a predetermined value, and negative torque transmission member 28 can transmit torque in the reverse rotational direction. In this example, positive torque transmission member 27, similarly in example 1, is constructed as a continuous body extended substantially in a device rotational direction between pulley 22 as driving body and hub body 23 as driven body, with its both end sections coupled to the side of pulley 22 and the side of hub body 23 via pin or rivet 29, sleeve 30.

Further, negative torque transmission member 28 is provided for transmission of negative torque in this example. Such negative torque transmission member 28 is formed in a divisional structure with contact section 31 therein, and has at least two such parts as main body of negative torque transmission member 28a which form contact section 31 and collar 28b in this example. By employing such successive members, coupling section 7 can be assembled as shown at the bottom in Fig. 6 (A). Fig. 6 (A) shows an assembled condition of coupling section 26, and in such an assembly process, sub ASSY of torque transmission member 32 as shown in Fig. 6 (B) is formed, and therefore, a condition where pre-loads are applied similarly in example 1 at that sub ASSY step can be realized.

Namely, at an assembly condition of sub ASSY of torque transmission member 32, pre-loads in directions opposite to each other are given respectively to positive torque transmission member 27 and negative torque transmission member 28, and the pre-loads are nearly balanced to each other by relation of action and reaction. In this example, a tensile pre-load and a compressive pre-load are applied, respectively in the device rotational direction to positive torque transmission member 27 and negative torque transmission member 28, and they are assembled so as to realize such a condition, at the assembly step of sub ASSY of torque transmission members 32: Also in this case, the tensile pre-load applied to positive torque transmission member 27 is set larger than torque value with consideration of the engine torque fluctuation which is generated between pulley 22 as driving body and hub body 23 as driven body, and is set smaller than a target interruption torque value.

Positive torque transmission member 27, similarly in example 1, has a narrow rupture section existing between coupling sections of both end sections, and can weaken a rigidity at that section by the existing of that section, suppress spring constant of a tension and rupture at that section when an excessive torque is produced, since the rupture strength at that section is weakened. In order to rupture surely at the side of positive torque strength of positive torque transmission member 27 in case that an excessive torque is generated, a rigidity or a rupture strength of positive torque transmission member 27 is set lower than a rigidity or a rupture strength of negative torque transmission member 28.

Further, as aforementioned, negative torque transmission member 28 is formed as a divisional structure and is in a condition where a compressive pre-load is applied by the structure of the portions present at both sides of contact section 31 contacted to each other. If only this part is regarded as an independent structure, because the portions at both sides of contact section 31 are allowed to be moved relatively (in particular, moved to relatively in the plate thickness direction)(a structure capable of being displaced in position), a means for regulating relative positional displacement is provided in order to prevent such a relative positional displacement. In this example, because such a means for regulating relative positional displacement is accomplished by being nipped with a divisional section (contact section 31) of negative torque transmission member 28 between a head section of pin or rivet 29 and positive torque transmission member 27, the nipping structure comprises the above-described means for regulating relative positional displacement.

In thus constructed power transmission device 21 according to example 2, torque is transmitted as described below. Fig. 5 shows a condition of a usual torque transmission. Also in this case, the effect, which has been explained using Fig. 9, can be obtained similarly in example 1. Namely, if a torque fluctuation amplitude ascribed to engine torque fluctuation applied to positive torque transmission member 17 is calculated, since a tensile pre-load greater than a torque value corresponding to the engine torque fluctuation is applied to positive torque transmission member 27, a compressive stress is not generated in a usual transmission condition, and a load fluctuation becomes φ (φ << 1) times the torque fluctuation amplitude (Wp+Wn), and therefore, the load fluctuation becomes very small (namely, it becomes smaller by φ times compared with the torque fluctuation amplitude (Wp+Wn) in the aforementioned conventional structure). That is because the spring constant Kb of positive torque transmission member 27 is set sufficiently smaller than the spring constant Kc of negative torque transmission member 28, similarly in example 1.

Thus, also in example 2, even if an engine torque fluctuation exists, its affection can be suppressed to the minimum. More concretely, amplitude of transmission torque fluctuation can be greatly reduced and a metal fatigue, and a fatigue of positive torque transmission member 27 in particular, can be minimized, and therefre, an accurate operation at the target rupture torque can be performed when an excessive torque is generated.

On the other hand, when the excessive torque is generated, as shown in Fig. 7, positive torque transmission member 27 ruptures at a central part as designed beforehand whose rigidity has been weakened, and the torque transmission is stopped. As a result, rotation of hub body 23 stops and rotation of main shaft 24 also stops, so that the drive force side, namely, pulley 22 or a belt, etc., for transmission of drive force to pulley 22 is also protected adequately. Then, the rupture of positive torque transmission member 27 quickly releases the engagement in a divisional section (contact section 31) of divisional structured negative torque transmission member 28, as shown in Fig. 7, and main body of negative torque transmission member 28a is pushed down toward inside by a part of torque transmission member attached at pulley 22 side. Therefore, a follow-on rupture and contact / interaction of the divided torque transmission members can be prevented, and only pulley 22 side is idled. Thus, a desirable torque interruption can be performed smoothly and surely.

Meanwhile, at the time of such rupture, a condition of coupling section 26 which has been constructed as the above-described assembly part becomes as shown in Fig. 8.

### Industrial Applications of the Invention

The power transmission device-related structure according the present invention can be applied to a general power transmission device which can interrupt torque by rupture of coupling member between a rotational driving body and a driven body, and specifically, it is suitable in a case where a drive source is an engine of a vehicle, and for example, where the power is transmitted to a compressor used in an air conditioning system for a vehicle.

## Claims

1. A power transmission device in which a driven body (3, 23) and a driving body (2, 22) for driving said driven body (3, 23) are rotated in the same direction and are connected to each other by a connection section (7, 26) to transmit torque of said driving body (2, 22) to said driven body (3, 23) and in which a transmission of torque from said driving body (2, 22) is interrupted when a drive load on said driven body (3, 23) exceeds a predetermined level, wherein said connection section (7, 26) is constructed by combining separate elements that are a positive torque transmission member (8, 27) which transmits torque in a normal rotational direction and interrupts transmission of torque from said driving body (2, 22) by breaking itself when a drive load on said driven body (3, 23) exceeds said predetermined level, and a negative torque transmission mechanism (9) or a negative torque transmission member (28 which can transmit torque in a reverse rotational direction, **characterized in that**
pre-loads in directions opposite to each other are given to said positive torque transmission member (8, 27) and said negative torque transmission mechanism (9) or negative torque transmission member (28) at an assembly condition thereof, and said pre-loads are nearly balanced to each other by relation of action and reaction,
wherein a tensile pre-load is applied to said positive torque transmission member (8, 27) and a compressive pre-load is applied to said negative torque transmission mechanism (9) or negative torque transmission member (28), in a device rotational direction (A).

2. The power transmission device according to claim 1, wherein a rigidity or a rupture strength of said positive torque transmission member (8, 27) is set lower than a rigidity or a rupture strength of said negative torque transmission mechanism (9) or negative torque transmission member (28).

3. The power transmission device according to claim 1, wherein said positive torque transmission member (8, 27) is constructed as a continuous body extending between said driving body (2, 22) and said driven body (3, 23).

4. The power transmission device according to claim 1, wherein said negative torque transmission mechanism (9) or negative torque transmission member (28) is formed in a divisional structure having a contact section (12, 31) in said mechanism or member.

5. The power transmission device according to claim 1, wherein a length of a part of said positive torque transmission member (8, 27) to which said tensile pre-load is applied is set shorter than a length of a part of said negative torque transmission mechanism (9) or negative torque transmission member (28) to which said compressive pre-load is applied.

6. The transmission device according to claim 1, wherein said negative torque transmission mechanism (9) has a spring section (13) that exhibits a spring force in a device radial direction and has an engagement section (14) that engages a side of said driving body (2, 22) and a side of said driven body (3, 23) via said spring section (13).

7. The power transmission device according to claim 6, wherein said engagement section (14) is constructed so as to be able to keep said spring force of said spring section (13) in said device radial direction.

8. The power transmission device according to claim 7, wherein said spring section (13) is constructed so as to be able to get back, by its own spring force, to its own free position that is non-interactive with said driving body (2, 22) or driven body (3, 23), after release of keeping of said spring force that is accompanied with an interruption of torque transmission between said driving body (2, 22) and said driven body (3, 23).

9. The power transmission device according to claim 1, wherein said positive torque transmission member (8, 27) and said negative torque transmission member (28) are pre-assembled as parts that can construct said connection section (7, 26), at a condition applied with respective predetermined pre-loads.

10. The power transmission device according to claim 4, wherein means for regulating relative positional displacement between both sides of said contact section (12) is provided for said negative torque transmission mechanism (9) or negative torque transmission member (28) which is constructed as said divisional structure.

11. The power transmission device according to claim 1, wherein a source of driving force is an engine of a vehicle.

12. The power transmission device according to claim 1, wherein said power transmission device is a device for transmitting torque to a compressor.

13. The power transmission device according to claim 12, wherein said power transmission device is a device for transmitting torque to a compressor used in an air conditioner for a vehicle.

14. A power transmission device according to any of the preceding claims, in which a driven body (3, 23) and a driving body (2, 22) for driving said driven body (3, 23) are rotated in the same direction and are connected to each other by a connection section (7, 26) to transmit torque of said driving body (2, 22) to said driven body (3, 23) and in which a transmission of torque from said driving body (2, 22) is interrupted when a drive load on said driven body (3, 23) exceeds a predetermined level, wherein said connection section (7, 26) is constructed by combining separate elements that are a positive torque transmission member (8, 27) which transmits torque in a normal rotational direction and interrupts transmission of torque from said driving body (2, 22) by breaking itself when a drive load on said driven body (3, 23) exceeds said predetermined level, and a negative torque transmission mechanism (9) or a negative torque transmission member (28) which can transmit torque in a reverse rotational direction **characterized in that**
a source of driving force is an engine of a vehicle
and wherein pre-loads which are applied in directions opposite to each other are given to said positive torque transmission member (8, 27) and said negative torque transmission mechanism (9) or negative torque transmission member (28) at an assembly condition thereof, said pre-loads are nearly balanced to each other by relation of action and reaction, and said pre-loads are greater than a value of torque to be transmitted including a torque fluctuation of said engine and smaller than a set value of torque at which a torque transmission should be interrupted.

## Patentansprüche

1. Leistungsübertragungsvorrichtung, in der ein angetriebener Körper (3, 23) und ein antreibender Körper (2, 22) zum Antreiben des angetriebenen Körpers (3, 23) in dieselbe Richtung gedreht werden und miteinander durch einen Verbindungsabschnitt (7, 26) verbunden sind, um ein Drehmoment des antreibenden Körpers (2, 22) auf den angetriebenen Körper (3, 23) zu übertragen, und in dem eine Übertragung des Drehmoments von dem antreibenden Körper (2, 22) unterbrochen wird, wenn eine Antriebslast auf den angetriebenen Körper (3, 23) ein vorbestimmtes Niveau überschreitet, wobei der Verbindungsabschnitt (7, 26) durch Kombinieren separater Elemente gebildet ist, welche ein positives Drehmomentübertragungsbauteil (8, 27), das ein Drehmoment in einer normalen Drehrichtung überträgt und eine Übertragung des Drehmoments von dem antreibenden Körper (2, 22) unterbricht, durch Brechen von sich selbst, wenn eine Antriebslast auf den angetriebenen Körper (3, 23) ein vorbestimmtes Niveau überschreitet, und ein negativer Drehmomentübertragungsmechanismus (9) oder ein negatives Drehmomentübertragungsbauteil (28), der/das das Drehmoment in einer entgegengesetzten Drehrichtung übertragen kann, sind, **dadurch gekennzeichnet, dass**
Vorlasten in zueinander entgegengesetzten Richtungen an dem positiven Drehmomentübertragungsbauteil (8, 27) und dem negativen Drehmomentübertragungsmechanismus (9) oder dem negativen Drehmomentübertragungsbauteil (28) in einem zusammengebauten Zustand davon gegeben sind, und die Vorlasten gegenseitig aufgrund der Beziehung von Aktion und Reaktion nahezu ausgeglichen sind,
wobei eine Zugvorlast an dem positiven Drehmomentübertragungsbauteil (8, 27) angelegt ist und eine Druckvorlast an dem negativen Drehmomentübertragungsmechanismus (9) oder dem negativen Drehmomentübertragungsbauteil (28) in einer Drehrichtung (A) der Vorrichtung angelegt ist.

2. Leistungsübertragungsvorrichtung gemäß Anspruch 1, wobei eine Steifigkeit oder Bruchfestigkeit des positiven Drehmomentübertragungsbauteils (8, 27) niedriger eingestellt ist als eine Steifigkeit oder eine Bruchfestigkeit des negativen Drehmomentübertragungsmechanismus (9) oder des negativen Drehmomentübertragungsbauteils (28).

3. Leistungsübertragungsvorrichtung gemäß Anspruch 1, wobei das positive Drehmomentübertragungsbauteil (8, 27) als ein durchgängiger Körper gebildet ist, der sich zwischen dem antreibenden Körper (2, 22) und dem angetriebenen Körper (3, 23) erstreckt.

4. Leistungsübertragungsvorrichtung gemäß Anspruch 1, wobei der negative Drehmomentübertragungsmechanismus (9) oder das negative Drehmomentübertragungsbauteil (28) in einer Teilstruktur gebildet ist, die einen Kontaktabschnitt (12, 31) in dem Mechanismus oder dem Bauteil besitzt.

5. Leistungsübertragungsvorrichtung gemäß Anspruch 1, wobei eine Länge eines Teils des positiven Drehmomentübertragungsbauteils (8, 27), an dem die Zugvorlast angelegt ist, kürzer eingestellt ist als eine Länge eines Teils des negativen Drehmomentübertragungsmechanismus (9) oder des negativen Drehmomentübertragungsbauteils (28), an dem die Zugvorlast angelegt ist.

6. Übertragungsvorrichtung gemäß Anspruch 1, wobei der negative Drehmomentübertragungsmechanismus (9) einen Federabschnitt (13) hat, der eine Federkraft in einer radialen Richtung der Vorrichtung ausübt, und einen Eingriffsabschnitt (14) hat, der an einer Seite des antreibenden Körpers (2, 22) und an einer Seite des angetriebenen Körpers (3, 23) mittels dem Federabschnitt (13) eingreift.

7. Leistungsübertragungsvorrichtung gemäß Anspruch 6, wobei der Eingriffsabschnitt (14) so gebildet ist, dass er in der Lage ist, die Federkraft des Federabschnitts (13) in der radialen Richtung der Vorrichtung zu erhalten.

8. Leistungsübertragungsvorrichtung gemäß Anspruch 7, wobei der Federabschnitt (13) so gebildet ist, dass er in der Lage ist, durch seine eigene Federkraft zurück zu seiner eigenen freien Position zu gelangen, d.h. ohne Wechselwirkung mit dem antreibenden Körper (2, 22) oder dem angetriebenen Körper (3, 23), nach Freigeben des Haltens der Federkraft, die von einer Unterbrechung der Drehmomentübertragung zwischen dem antreibenden Körper (2, 22) und dem angetriebenen Körper (3, 23) begleitet ist.

9. Leistungsübertragungsvorrichtung gemäß Anspruch 1, wobei das positive Drehmomentübertragungsbauteil (8, 27) und das negative Drehmomentübertragungsbauteil (28) als Teile vormontiert sind, die den Verbindungsabschnitt (7, 26) bilden, in einem Zustand, in dem entsprechende vorbestimmte Vorlasten angelegt sind.

10. Leistungsübertragungsvorrichtung gemäß Anspruch 4, wobei ein Mittel zum Regulieren der relativen Positionsverschiebung zwischen beiden Seiten des Kontaktabschnitts (12) für den negativen Drehmomentübertragungsmechanismus (9) oder das negative Drehmomentübertragungsbauteil (28), das als Teilstruktur ausgebildet ist, vorgesehen ist.

11. Leistungsübertragungsvorrichtung gemäß Anspruch 1, wobei eine Quelle der Antriebskraft ein Motor eines Fahrzeugs ist.

12. Leistungsübertragungsvorrichtung gemäß Anspruch 1, wobei die Leistungsübertragungsvorrichtung eine Vorrichtung zum Übertragen eines Drehmoments auf einen Kompressor ist.

13. Leistungsübertragungsvorrichtung gemäß Anspruch 12, wobei die Leistungsübertragungsvorrichtung eine Vorrichtung zum Übertragen eines Drehmoments auf einen Kompressor ist, der in einer Klimaanlage für ein Fahrzeug verwendet wird.

14. Leistungsübertragungsvorrichtung gemäß einem der vorhergehenden Ansprüche, in der ein angetriebener Körper (3, 23) und ein antreibender Körper (2, 22) zum Antreiben des angetriebenen Körpers (3, 23) in derselben Richtung gedreht werden und miteinander durch einen Verbindungsabschnitt (7, 26) verbunden sind, um ein Drehmoment des antreibenden Körpers (2, 22) auf den angetriebenen Körper (3, 23) zu übertragen, und in der eine Übertragung des Drehmoments von dem antreibenden Körper (2, 22) unterbrochen wird, wenn eine Antriebslast auf dem angetriebenen Körper (3, 23) ein vorbestimmtes Niveau überschreitet, wobei der Verbindungsabschnitt (7, 26) durch Kombinieren separater Elemente gebildet wird, die ein positives Drehmomentübertragungsbauteil (8, 27), das Drehmoment in einer normalen Drehrichtung überträgt und die Übertragung des Drehmoments von dem antreibenden Körper (2, 22) durch Brechen von sich selbst unterbricht, wenn eine Antriebslast auf den angetriebenen Körper (3, 23) das vorbestimmte Niveau überschreitet, und ein negativer Drehmomentübertragungsmechanismus (9) oder ein negatives Drehmomentübertragungsbauteil (28), der/das das Drehmoment in einer entgegengesetzten Drehrichtung übertragen können, sind, **dadurch gekennzeichnet, dass**
eine Quelle der Antriebskraft ein Motor eines Fahrzeugs ist,
und wobei Vorlasten, die in zueinander entgegengesetzten Richtungen an dem positiven Drehmomentübertragungsbauteil (8, 27) und dem negativen Drehmomentübertragungsmechanismus (9) oder dem negativen Drehmomentübertragungsbauteil (28) in einem zusammengebauten Zustand davon angelegt sind, wobei die Vorlasten durch die Beziehung von Aktion und Reaktion gegenseitig nahezu ausgeglichen sind und die Vorlasten größer sind als ein Wert des Drehmoments, das übertragen werden soll, inklusive einer Drehmomentfluktuation des Motors, und kleiner sind als ein eingestellter Wert des Drehmoments, bei dem eine Drehmomentübertragung unterbrochen werden soll.

## Revendications

1. Dispositif de transmission de puissance dans lequel un corps entraîné (3, 23) et un corps d'entraînement (2, 22) pour entraîner ledit corps entraîné (3, 23) sont entraînés en rotation dans la même direction et sont raccordés l'un à l'autre par une section de raccordement (7, 26) pour transmettre le couple dudit corps d'entraînement (2, 22) audit corps entraîné (3, 23) et dans lequel une transmission du couple à partir dudit corps d'entraînement (2, 22) est interrompue lorsqu'une charge d'entraînement sur ledit corps entraîné (3, 23) dépasse un niveau prédéterminé, dans lequel ladite section de raccordement (7, 26) est construite en combinant des éléments séparés qui sont un élément de transmission de couple positif (8, 27) qui transmet le couple dans une direction de rotation normale et interrompt la transmission du couple à partir dudit corps d'entraînement (2, 22) en se cassant lui-même lorsqu'une charge d'entraînement sur ledit corps d'entraînement (3, 23) dépasse ledit niveau prédéterminé, et un mécanisme de transmission de couple négatif (9) ou un élément de transmission de couple négatif (28) qui peut transmettre le couple dans une direction de rotation inversé, **caractérisé en ce que :**
des précharges dans des directions opposées entre elles sont données audit élément de transmission de couple positif (8, 27) et audit mécanisme de transmission de couple négatif (9) ou à l'élément de transmission de couple négatif (28) dans sa condition d'ensemble, et lesdites précharges sont presque équilibrées entre elles par la relation de l'action et de la réaction,
dans lequel une précharge de traction est appliquée sur ledit élément de transmission de couple positif (8, 27) et une précharge de compression est appliquée sur ledit mécanisme de transmission de couple négatif (9) ou un élément de transmission de couple négatif (28), dans une direction de rotation (A) de dispositif.

2. Dispositif de transmission de puissance selon la revendication 1, dans lequel une rigidité ou une résistance à la rupture dudit élément de transmission de couple positif (8, 27) est inférieure à une rigidité ou à une résistance à la rupture dudit mécanisme de transmission de couple négatif (9) ou élément de transmission de couple négatif (28).

3. Dispositif de transmission de puissance selon la revendication 1, dans lequel ledit élément de transmission de couple positif (8, 27) est construit comme un corps continu s'étendant entre ledit corps d'entraînement (2, 22) et ledit corps entraîné (3, 23).

4. Dispositif de transmission de puissance selon la revendication 1, dans lequel ledit mécanisme de transmission de couple négatif (9) ou l'élément de transmission de couple négatif (28) est formé dans une structure de division ayant une section de contact (12, 31) dans ledit mécanisme ou élément.

5. Dispositif de transmission de puissance selon la revendication 1, dans lequel une longueur d'une partie dudit élément de transmission de couple positif (8, 27) sur lequel ladite précharge de traction est appliquée, est plus courte qu'une longueur d'une partie dudit mécanisme de transmission de couple négatif (9) ou élément de transmission de couple négatif (28) sur lequel ladite précharge de compression est appliquée.

6. Dispositif de transmission selon la revendication 1, dans lequel ledit mécanisme de transmission de couple négatif (9) a une section de ressort (13) qui laisse apparaître une force de rappel dans une direction radiale de dispositif et a une section de mise en prise (14) qui met en prise un côté dudit corps d'entraînement (2, 22) et un côté dudit corps entraîné (3, 23) via ladite section de ressort (13).

7. Dispositif de transmission de puissance selon la revendication 6, dans lequel ladite section de mise en prise (14) est construite afin de pouvoir maintenir ladite force de rappel de ladite section de ressort (13) dans ladite direction radiale de dispositif.

8. Dispositif de transmission de puissance selon la revendication 7, dans lequel ladite section de ressort (13) est construite afin de pouvoir revenir, grâce à sa propre force de rappel, dans sa propre position libre qui n'est pas interactive avec ledit corps d'entraînement (2, 22) ou le corps entraîné (3, 23), après le déblocage du maintien de ladite force de rappel qui est accompagnée d'une interruption de transmission de couple entre ledit corps d'entraînement (2, 22) et ledit corps entraîné (3, 23).

9. Dispositif de transmission de puissance selon la revendication 1, dans lequel ledit élément de transmission de couple positif (8, 27) et ledit élément de transmission de couple négatif (28) sont préassemblés comme des parties qui peuvent construire ladite section de raccordement (7, 26), dans une condition appliquée par rapport aux précharges prédéterminées respectives.

10. Dispositif de transmission de puissance selon la revendication 4, dans lequel on prévoit des moyens pour réguler le déplacement positionnel relatif entre les deux côtés de ladite section de contact (12) pour ledit mécanisme de transmission de couple négatif ou l'élément de transmission de couple négatif (28) qui est construit sous la forme de ladite structure de division.

11. Dispositif de transmission de puissance selon la revendication 1, dans lequel une source de force d'entraînement est un moteur d'un véhicule.

12. Dispositif de transmission de puissance selon la revendication 1, dans lequel ledit dispositif de transmission de puissance est un dispositif pour transmettre le couple à un compresseur.

13. Dispositif de transmission de puissance selon la revendication 12, dans lequel ledit dispositif de transmission de puissance est un dispositif pour transmettre le couple à un compresseur utilisé dans un dispositif de conditionnement d'air pour un véhicule.

14. Dispositif de transmission de puissance selon l'une quelconque des revendications précédentes, dans lequel un corps entraîné (3, 23) et un corps d'entraînement (2, 22) pour entraîner ledit corps entraîné (3, 23) sont entraînés en rotation dans la même direction et sont raccordés l'un à l'autre par une section de raccordement (7, 26) pour transmettre le couple dudit corps d'entraînement (2, 22) audit corps entraîné (3, 23) et dans lequel une transmission de couple provenant dudit corps d'entraînement (2, 22) est interrompue lorsqu'une charge d'entraînement sur ledit corps entraîné (3, 23) dépasse un niveau prédéterminé, dans lequel ladite section de raccordement (7, 26) est construite en combinant des éléments séparés qui sont un élément de transmission de couple positif (8, 27) qui transmet le couple dans une direction de rotation normale et interrompt la transmission de couple provenant dudit corps d'entraînement (2, 22) en se cassant lui-même lorsqu'une charge d'entraînement sur ledit corps entraîné (3, 23) dépasse ledit niveau prédéterminé, et un mécanisme de transmission de couple négatif (9) ou élément de transmission de couple négatif (28) qui peut transmettre le couple dans une direction de rotation inverse, **caractérisé en ce que :**
une source de force d'entraînement est un moteur d'un véhicule,
et dans lequel des précharges qui sont appliquées dans des directions opposées entre elles sont données audit élément de transmission de couple positif (8, 27) et audit mécanisme de transmission de couple négatif (9) ou élément de transmission de couple négatif (28) dans leur condition d'ensemble, lesdites précharges sont presque équilibrées entre elles par la relation d'action et de réaction, et lesdites précharges sont supérieures à une valeur de couple à transmettre comprenant une fluctuation de couple dudit moteur et inférieure à une valeur déterminée de couple à laquelle une transmission de couple doit être interrompue.
